(19) Europäisches Patentamt
European Patent Office
Office européen des brevets

(11) Veröffentlichungsnummer: **0 031 478**
**B1**

(12) **EUROPÄISCHE PATENTSCHRIFT**

(45) Veröffentlichungstag der Patentschrift: **09.11.83**

(51) Int. Cl.³: **C 09 B 67/48,** C 09 B 67/10, C 09 B 29/08, D 06 P 3/54

(21) Anmeldenummer: **80107549.0**

(22) Anmeldetag: **03.12.80**

# (54) Färbestabiler Monoazofarbstoff, dessen Herstellung und Verwendung.

(30) Priorität: **15.12.79 DE 2950588**

(43) Veröffentlichungstag der Anmeldung: **08.07.81 Patentblatt 81/27**

(45) Bekanntmachung des Hinweises auf die Patenterteilung: **09.11.83 Patentblatt 83/45**

(84) Benannte Vertragsstaaten: **CH DE FR GB IT LI NL**

(56) Entgegenhaltungen:
**DE - B - 1 069 313**
**DE - B - 1 260 654**
**FR - A - 2 322 175**
**LU - A - 56 463**
**US - A - 2 007 382**
**US - A - 3 122 410**

**CHEMICAL ABSTRACTS, Band 90, Nr. 16 April 1979, Seite 74, Zusammenfassung Nr. 123029g Columbus, Ohio, US G.V. SHALIMOVA et al.: "Effect of crystal structure on the coloristic properties of vat and disperse dyes II. Effect of morphological characteristics of disperse dyes-1,1'-azobenzene derivatives on their physicochemical and coloristic properties"**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Schickfluss, Rudolf, Dr., Luisenstrasse 37, D-6233 Kelkheim (Taunus) (DE)**
Erfinder: **Kruse, Hubert, Luisenstrasse 33, D-6233 Kelkheim (Taunus) (DE)**

EP 0 031 478 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Färbestabiler Monoazofarbstoff, dessen Herstellung und Verwendung

Die vorliegende Erfindung betrifft eine neue färbestabile kristallographische Modifikation (»$\beta$-Modfikation«) des Farbstoffs der Formel

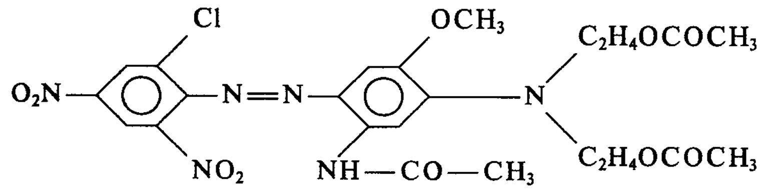

die das in Fig. 1 gezeigte Röntgenbeugungsdiagramm mit den charakteristischen Reflexen bei folgenden Glanzwinkeln ($CuK_\alpha$-Strahlung) und den angegebenen Intensitäten hat:

| [$\theta$] | 2,9 | 4,5 | 5,24 | 5,41 | 8,95 | 10,56 | 11,88 | 12,73 | 13,7 |
|---|---|---|---|---|---|---|---|---|---|
| relative Intensität | 24,7 | 63 | 57,4 | 65,4 | 35,2 | 37,7 | 100 | 59,3 | 39,5 |

Der Farbstoff der vorstehend genannten Formel wird durch Diazotieren von 2,4-Dinitro-6-chlor-anilin in konzentrierter Schwefelsäure und anschließendes Kuppeln der so erhaltenen Diazolösung mit 4-Acetamino-2-N-(bisacetoxäthyl)aminoanisol in wäßrig mineralsaurem Medium erhalten. Dabei fällt die färbeinstabile $\alpha$-Modifikation an, die unter den in der Praxis des Färbens auftretenden Bedingungen keine genügende Stabilität besitzt.

Die $\alpha$-Modifikation weist das in Fig. 2 gezeigte Röntgenbeugungsdiagramm mit den charakteristischen Reflexen bei folgenden Glanzwinkeln $\theta$ ($CuK_\alpha$-Strahlung) und den angegebenen Intensitäten auf:

| [$\theta$] | 2,9 | 3,6 | 4,76 | 7,75 | 8,8 | 12,15 | 12,72 |
|---|---|---|---|---|---|---|---|
| relative Intensität | 42,9 | 100 | 60,5 | 30,2 | 33,3 | 54,3 | 100 |

Unter Färbebedingungen, wie hoher Temperatur und in Gegenwart von Färbereihilfsmitteln, ändert sich die färbestabile $\beta$-Modifikation hinsichtlich Kristallgröße und Kristallform praktisch nicht mehr, so daß die färberischen Eigenschaften und die Stabilität der Dispersion im Gegensatz zur färbeinstabilen $\alpha$-Modifikation dabei nicht beeinträchtigt werden. So wird beobachtet, daß die färbestabile $\beta$-Modifikation besser lagerfähige Flüssigeinstellungen ergibt.

Die neue färbestabile $\beta$-Modifikation kann durch zweistündiges oder längeres Erhitzen, gegebenenfalls unter Druck, einer wäßrigen Suspension der $\alpha$-Modifikation auf Temperaturen von 60 – 130° C erhalten werden.

Die Umwandlung in die färbestabile $\beta$-Modifikation findet auch durch Erhitzen der $\alpha$-Modifikation in wäßriger Suspension unter Zusatz von wasserlöslichen organischen Lösungsmitteln, wie beispielsweise Äthanol oder Glykol, statt.

Man erhält die färbestabile $\beta$-Modifikation ferner durch Erhitzen einer wäßrigen Suspension der $\alpha$-Modifikation unter Zusatz von anionischen, kationischen oder nichtionischen oberflächenaktiven Verbindungen auf Temperaturen von etwa 80 – 100° C. Hierfür geeignete oberflächenaktive Verbindungen sind beispielsweise diisobutylnaphthalinsulfonsaures Natrium, das Anlagerungsprodukt von 25 Mol Äthylenoxid an 1 Mol Stearylalkohol, ein Gemisch aus Alkyldimethylbenzylammoniumchloriden, ein Fettsäurepolyglykolsäureester oder der tertiäre Phosphorsäureester des Anlagerungsproduktes von 2 Mol Äthylenoxid an 1 Mol Laurylalkohol.

Schließlich kann die färbestabile $\beta$-Modifikation dadurch erhalten werden, daß man die $\alpha$-Modifikation unter Zusatz üblicher Dispergiermittel, wie beispielsweise Polyvinylsulfonaten, Kondensationsprodukten aus Naphthalinsulfonsäure und Formaldehyd oder aus Phenol, Formaldehyd und Natriumbisulfit, Alkalisalzen von Ligninsulfonaten oder Sulfitcelluloseablauge, bei Temperaturen von etwa 60 – 90° C feinverteilt.

Die färbestabile $\beta$-Modifikation wird beispielsweise durch Filtrieren von der flüssigen Phase abgetrennt und einem bekannten Finish unter Zusatz von Dispergiermitteln, wie beispielsweise Polyvinylsulfonaten, Kondensationsprodukten aus Naphthalinsulfonsäure und Formaldehyd oder aus Phenol, Formaldehyd und Natriumbisulfit, Alkalisalzen von Ligninsulfonaten oder Sulfitcelluloseablauge, bei den üblichen Temperaturen unterworfen. Für die Feinverteilung eignen sich die üblichen Vorrichtungen, wie beispielsweise Kugelmühlen oder Sandmühlen.

Die Präparationen können weitere Zusätze enthalten, wie zum Beispiel Konservierungsmittel (bei

Flüssig-Einstellungen), Entstaubungsmittel, Netzmittel, Antischaummittel oder Frostschutzmittel (bei Flüssig-Einstellungen).

Die auf diese Weise erhaltenen flüssigen oder pulverförmigen Präparationen der färbestabilen $\beta$-Modifikation eignen sich im Gegensatz zu vergleichbaren Präparationen der $\alpha$-Modifikation uneingeschränkt zum Färben von Textilmaterialien aus Cellulosefasern, synthetischen linearen Polyestern, wie Polyäthylenglykolterephthalat, oder Mischgeweben solcher Polyester mit Wolle oder Zellwolle bei Temperaturen zwischen 100 und 200° C.

Die Präparationen, welche die färbestabile $\beta$-Modifikation enthalten, flocken in wäßrigem Medium und bei Einwirkung hoher Temperaturen nicht aus, was beonders für die Färbung von Wickelkörpern, beispielsweise Kreuzspulen, von Bedeutung ist.

Die wesentlich bessere Eignung der die färbestabile $\beta$-Modifikation enthaltenden Präparationen für die Praxis machen sich bereits in den verschiedensten Färbereitests durch deutlich überlegene Prüfergebnisse bemerkbar. Beispielsweise ist dies beim Heat-Stability-Test, der ein Kriterium für die Flottenstabilität ist, und im Praxi-Test auf Mischgeweben, wie solchen aus Polyesterfasern und Zellwolle, der Fall. Der Praxi-Test gestattet es, die Eignung von Dispersionsfarbstoffpräparationen für das Färben von Wickelkörpern mit geringem Aufwand praxisgerecht zu prüfen.

In den folgenden Beispielen sind Teile und Prozente, wenn nicht anders vermerkt, Gewichtsteile und Gewichtsprozente.

### Beispiel 1

100 Teile des durch Diazotieren von 2,4-Dinitro-6-chloranilin in konzentrierter Schwefelsäure und durch Kuppeln der so erhaltenen Diazolösung mit einer Lösung von 2-(N,N-Diacetoxäthyl)-amino-4-acetaminoanisol in verdünnter Essigsäure hergestellten Farbstoffs ($\alpha$-Modifikation) werden nach einer Zwischenisolierung in 500 ml Wasser suspendiert und mit 4 g eines Teigs aus dem Natriumsalz (eines Kondensationsproduktes aus Oleylchlorid und N-Methyltaurin) 4 Stunden auf 90° C erhitzt. Dabei wandelt sich die färbeinstabile $\alpha$-Modifikation in die färbestabile $\beta$-Modifikation um.

Der Farbstoff wird abfiltriert und mit 110 Teilen eines Kondensationsproduktes aus Kresol, Formaldehyd und Natriumbisulfit, 20 Teilen des Natriumsalzes von Diisobutylnaphthalinsulfonsäure und Wasser in einer Perlmühle nicht über 50° C gemahlen, bis die Feinverteilung gut ist. Anschließend wird die Präparation in einer Sprühapparatur getrocknet. Nach dem Trocknen wird mit dinaphthylmethansulfonsaurem Natrium auf die gewünschte Stärke am Reinfarbstoff eingestellt.

Das so erhaltene Pulver genügt allen technischen Anforderungen.

### Beispiel 2

100 Teile des gemäß dem ersten Absatz von Beispiel 1 erhaltenen Monoazofarbstoffes ($\alpha$-Modifikation) werden nach Einstellen des pH-Wertes auf etwa 4 durch vierstündiges Erhitzen einer wäßrigen Suspension auf 95° C in die färbestabile $\beta$-Modifikation übergeführt. Der wasserfeuchte Nutschkuchen wird mit 60 Teilen eines Kondensationsproduktes aus Kresol, Formaldehyd und Natriumbisulfit, 60 Teilen des Natriumsalzes eines Ligninsulfonats und 20 Teilen des Natriumsalzes von diisobutylnaphthalinsulfonsaurem Natrium, wie in Beispiel 1 beschrieben, gemahlen, getrocknet und eingestellt. Die so erhaltene pulverförmige Präparation genügt allen Anforderungen, die in der Praxis gestellt werden.

### Beispiel 3

100 Teile des durch Diazotieren von 2,4-Dinitro-6-chloranilin in konzentrierter Schwefelsäure und durch Kuppeln der so erhaltenen Diazolösung mit einer Lösung von 2-(N,N-Diacetoxäthyl)-amino-4-acetamino-anisol hergestellten Farbstoffs ($\alpha$-Modifikation) werden in einer wäßrigen Suspension, die 10% Methanol enthält, vier Stunden auf 60° C erhitzt und nach dem Erkalten abgesaugt. Der wasserfeuchte Nutschkuchen ($\beta$-Modifikation) wird mit 100 Teilen des Natriumsalzes einer Ligninsulfonsäure angeteigt und in einer Perlmühle unter Kühlung bis zur genügenden Feinverteilung gemahlen. Man erhält eine flüssige Farbstoffpräparation von einwandfreien färberischen Eigenschaften und guter Lager-Stabilität.

### Beispiel 4

100 Teile des gemäß Beispiel 3 erhaltenen Monoazofarbstoffs ($\alpha$-Modifikation) werden mit 110 Teilen eines Kondensationsproduktes aus Kresol, Formaldehyd und Natriumbisulfit und 20 Teilen des Natriumsalzes von Diisobutylnaphthalinsulfonsäure und Wasser in einer Perlmühle bei 75° – 80° C

gemahlen, bis die Feinverteilung zufriedenstellend ist. Dabei wird die färbestabile $\alpha$-Modifikation in die färbestabile $\beta$-Modifikation umgewandelt. Die Präparation wird in einer Sprühapparatur getrocknet und, wie in Beispiel 1 beschrieben, auf die gewünschte Stärke an Reinfarbstoff eingestellt.

Beispiel 5

100 Teile des gemäß Beispiel 3 erhaltenen Monoazofarbstoffs werden in einer wäßrigen Suspension, die 1 Vol.-% des tertiären organischen Phosphorsäureesters des Umsetzungsproduktes von Laurylalkohol mit 2 Mol Äthylenoxid enthält, vier Stunden bei 80°C gerührt. Der abfiltrierte Farbstoff wird, wie in Beispiel 1 beschrieben, gemahlen. Man erhält eine hervorragende lagerstabile flüssige Farbstoffpräparation mit einwandfreien färberischen Eigenschaften.

**Patentansprüche**

1. Die färbestabile Modifikation ($\beta$-Modifikation) des Farbstoffes der Formel

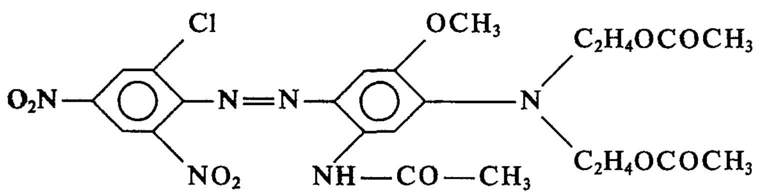

gekennzeichnet durch das in Fig. 1 gezeigte Röntgenbeugungsdiagramm mit den charakteristischen Reflexen bei den nachstehenden Glanzwinkeln $\Theta$ und den angegebenen relativen Intensitäten:

| [$\Theta$] | 2,9 | 4,5 | 5,24 | 5,41 | 8,95 | 10,56 | 11,88 | 12,73 | 13,7 |
|---|---|---|---|---|---|---|---|---|---|
| **relative Intensitäten** | 24,7 | 63 | 57,4 | 65,4 | 35,2 | 37,7 | 100 | 59,3 | 39,5 |

2. Verfahren zur Herstellung der färbestabilen Modifikation ($\beta$-Modifikaton) des Farbstoffs der Formel

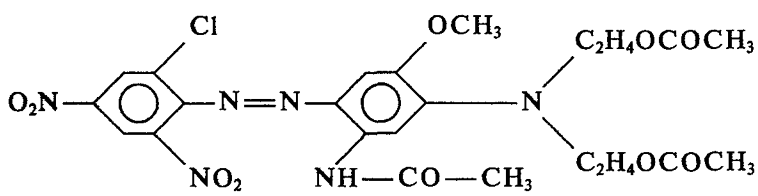

welche das in Fig. 1 gezeigte Röntgenbeugungsdiagramm mit den charakteristischen Reflexen bei den nachstehend angegebenen Glanzwinkeln $\Theta$ und den angegebenen relativen Intensitäten

| [$\Theta$] | 2,9 | 4,5 | 5,24 | 5,41 | 8,95 | 10,56 | 11,88 | 12,73 | 13,7 |
|---|---|---|---|---|---|---|---|---|---|
| **relative Intensität** | 24,7 | 63 | 57,4 | 65,4 | 35,2 | 37,7 | 100 | 59,3 | 39,5 |

aufweist, dadurch gekennzeichnet, daß man den Farbstoff der genannten Formel der färbeinstabilen $\alpha$-Modifikation, welche durch das Röntgenbeugungsdiagramm der Fig. 2 charakterisiert ist,

a) in wäßriger Suspension auf Temperaturen von 60—130°C erhitzt oder
b) in wäßriger Suspension in Gegenwart von Dispergiermitteln bei etwa 60 bis 90°C feinverteilt.

3. Verfahren nach Anspruch 2a, dadurch gekennzeichnet, daß man unter Zusatz von wasserlöslichen organischen Lösungsmitteln erhitzt.

4. Verfahren nach Anspruch 2b, dadurch gekennzeichnet, daß man unter Zusatz von anionischen, kationischen oder nichtionischen oberflächenaktiven Verbindungen auf Temperaturen von etwa 80 bis 100°C erhitzt.

5. Verwendung der in Anspruch 1 genannten färbestabilen Modifikation ($\beta$-Modifikation) zum Färben von Fasermaterialien aus Celluloseestern oder synthetischen linearen Polyestern oder Mischgeweben solcher Polyesterfasermaterialien mit Wolle oder Zellwolle.

## Claims

1. The modification stable under dyeing conditions ($\beta$-modification) of the dyestuff of the formula

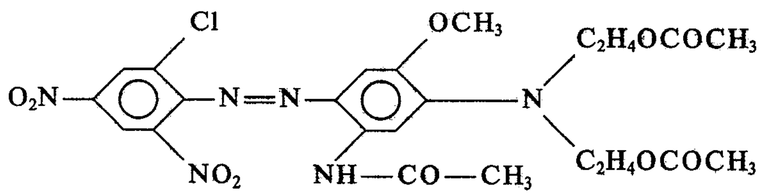

showing the X-ray diffraction pattern as indicated in Fig. 1 with the characteristic reflections at the following glancing angles $\Theta$ and the following relative intensity data:

| | | | | | | | | | |
|---|---|---|---|---|---|---|---|---|---|
| [$\Theta$] | 2,9 | 4,5 | 5,24 | 5,41 | 8,95 | 10,56 | 11,88 | 12,73 | 13,7 |
| Intensités relatives | 24,7 | 63 | 57,4 | 65,4 | 35,2 | 37,7 | 100 | 59,3 | 39,5 |

2. Process for the manufacture of the modification stable under dyeing conditions ($\beta$-modification) of the dyestuff of the formula

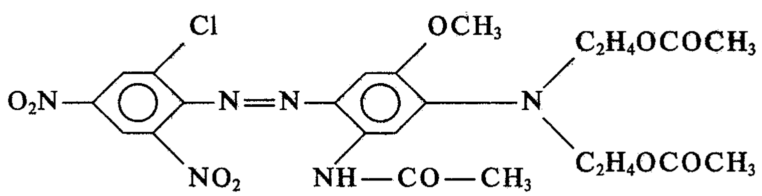

which has the X-ray diffraction pattern indicated in Fig. 1 with the characteristic reflections at the following glancing angles $\Theta$ and the following intenstity data:

| | | | | | | | | | |
|---|---|---|---|---|---|---|---|---|---|
| [$\Theta$] | 2,9 | 4,5 | 5,24 | 5,41 | 8,95 | 10,56 | 11,88 | 12,73 | 13,7 |
| Intensités relatives | 24,7 | 63 | 57,4 | 65,4 | 35,2 | 37,7 | 100 | 59,3 | 39,5 |

wherein the dyestuff of the said formula of the $\alpha$-modification unstable under dyeing conditions characterized by the X-ray diffraction pattern as indicated in Fig. 2 is

a) heated in aqueous suspension at temperatures of from 60 to 130° C or
b) finely dispersed in aqueous suspension in the presence of dispersing agents at temperatures from about to 60 – 90° C.

3. Process as claimed in claim 2a, wherein the heating is carried out in the presence of a water-soluble organic solvent.

4. Process as claimed in claim 2b, wherein the heating is carried out in the presence of anionic, cationic or nonionic surfactants at temperatures of from about 80 to 100° C.

5. Use of the modification stable under dyeing conditions ($\beta$-modification) indicated in claim 1 for the dyeing of fiber materials made from cellulose esters or synthetic linear polyesters, or blended fabrics of such polyester fiber materials with wool or vicose staple fibers.

## Revendications

1. Modification stable à la teinture (modification $\beta$) du colorant de formule

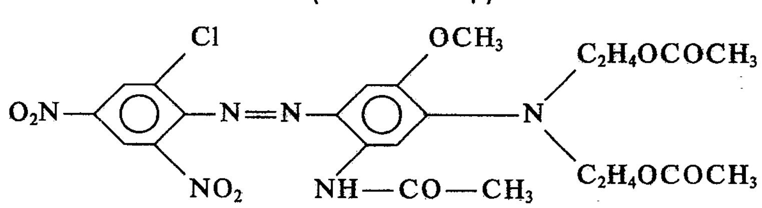

caractérisée en ce qu'elle présente l'image de diffraction aux rayons X de la Fig. 1, avec des réflexions

caractéristiques aux angles de Bragg $\Theta$ suivants, et les intensités relatives indiquées:

| [$\Theta$] | 2,9 | 4,5 | 5,24 | 5,41 | 8,95 | 10,56 | 11,88 | 12,73 | 13,7 |
|---|---|---|---|---|---|---|---|---|---|
| relative intensities | 24,7 | 63 | 57,4 | 65,4 | 35,2 | 37,7 | 100 | 59,3 | 39,5 |

2. Procédé de préparation de la modification stable à la teinture (modification $\beta$) du colorant de formule

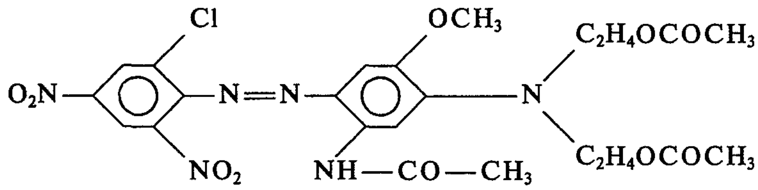

qui présente l'image de diffraction aux rayons X de la Fig. 1, avec des réflexions caractéristiques pour les angles de Bragg $\Theta$ indiqués ci-après et les intensités relatives indiquées

| [$\Theta$] | 2,9 | 4,5 | 5,24 | 5,41 | 8,95 | 10,56 | 11,88 | 12,73 | 13,7 |
|---|---|---|---|---|---|---|---|---|---|
| relative intensities | 24,7 | 63 | 57,4 | 65,4 | 35,2 | 37,7 | 100 | 59,3 | 39,5 |

caractérisé en ce que

a) On chauffe en suspension aqueuse à des températures de 60 – 130° C, ou
b) On divise finement en suspension aqueuse en présence de dispersants à environ 60 – 90° C,

le colorant, ayant la formule ci-dessus, de la modification $\alpha$ instable à la teinture, laquelle est caractérisée par l'image de diffraction aux rayons X de la Fig. 2.

3. Procédé selon la revendication 2a, caractérisé en ce qu'on chauffe sous addition de solvants organiques solubles dans l'eau.

4. Procédé selon la revendication 2b, caractérisé en ce qu'on chauffe à des températures d'environ 80 à 100° C sous addition de composés tensioactifs anioniques, cationiques ou non-ioniques.

5. Utilisation de la modification stable à la teinture (modification $\beta$) selon la revendication 1 pour teindre des matériaux en fibres en esters cellulosiques ou en polyesters linéaires synthétiques ou en tissus mixtes de ces matériaux en fibres de polyester avec de la laine ou de la fibranne.

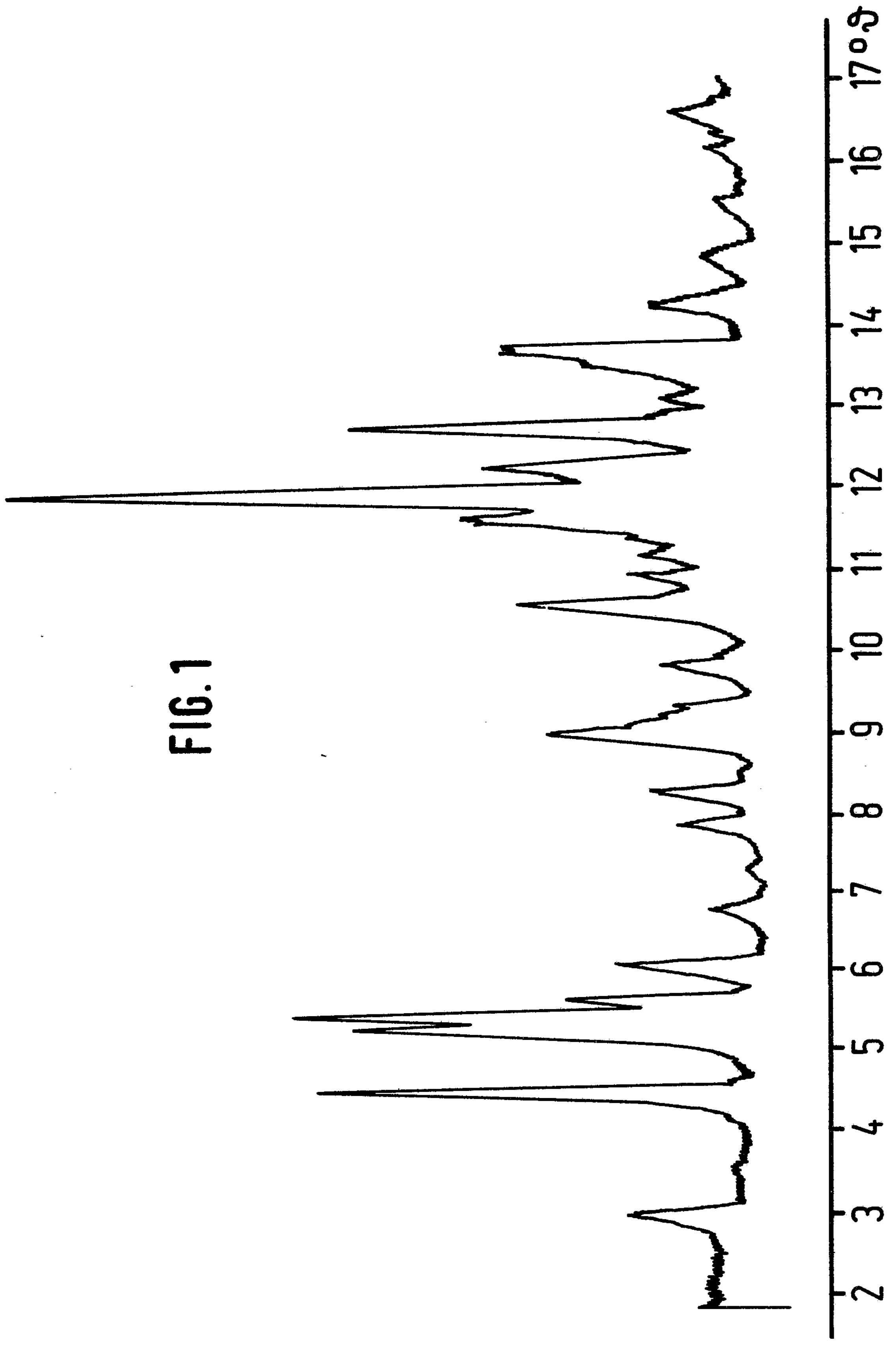


FIG.1

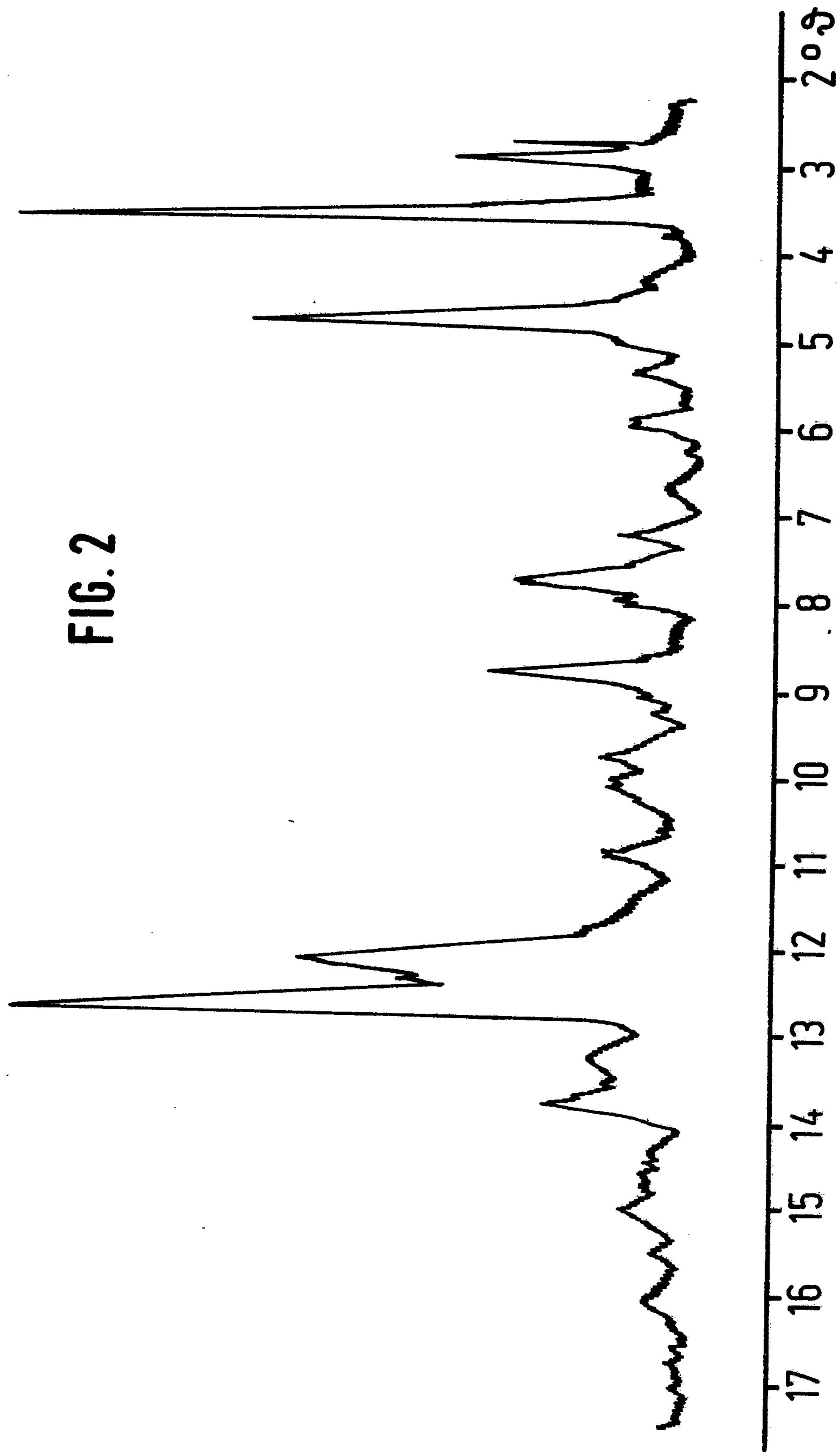


FIG. 2